**Europäisches Patentamt**

**European Patent Office**

**Office européen des brevets**

(19)

(11) Publication number:

**0 048 620**

**B1**

(12) # EUROPEAN PATENT SPECIFICATION

(45) Date of publication of patent specification: **19.03.86**

(51) Int. Cl.⁴: **F 16 C 1/22, F 16 D 13/75**

(21) Application number: **81304331.2**

(22) Date of filing: **21.09.81**

(54) **Cable-and-sleeve connector.**

(30) Priority: **22.09.80 US 189362**

(43) Date of publication of application:
**31.03.82 Bulletin 82/13**

(45) Publication of the grant of the patent:
**19.03.86 Bulletin 86/12**

(84) Designated Contracting States:
**DE FR GB IT**

(56) References cited:
**EP-A-0 030 494**
**FR-A-2 278 982**
**GB-A-2 016 634**

(73) Proprietor: **ACCO INDUSTRIES INC.**
**101 Oakview Drive**
**Trumbull Connecticut 06611 (US)**

(72) Inventor: **Gilmore, William John**
**Manitou Beach Michigan 49253 (US)**

(74) Representative: **Sinnett, Richard Albert Edward**
**Babcock & Wilcox Ltd. Cleveland House 19 St.**
**James's Square**
**London SW1Y 4LN (GB)**

Courier Press, Leamington Spa, England.

## Description

This invention is concerned with cable-and-sleeve connectors such as are widely used, for example, in automobiles to connect the clutch or brake to an actuation member by which operation of the clutch or brake can be effected. Such connectors can easily be curved, to pass round corners, for instance, and need not be rigidly supported along their length, with the result that some deformability of the curve or curves is possible.

Now in manual shift systems of automobiles, the clutch facing plate wears during use resulting in the relatively heavy clutch spring drawing the cable further towards the clutch and effectively shortening the cable so that play will be introduced between clutch pedal and the cable. On the other hand in braking systems, the effective length of the cable is increased as the brake shoes wear down which results in undesirable play being introduced into the brake system requiring the brake pedal to be depressed excessively before a braking force is exerted.

Undesirable play can also be introduced into a cable-and-sleeve connector as a result of wear between the cable and the inner wall of the sleeve. In addition wear may occur between a cable and a sheave over which the cable extends and this may introduce undesirable play into a control cable system.

An earlier proposal for use in automobiles and intended especially to permit compensation for the wear developing in the motor clutch is described in U.K. Specification No. 2 016 634A. In this, the length of the sleeve remains constant whilst the effective length of the cable is adjusted to accommodate wear. The adjustment is effected by means of a body into which an end of the cable slides to the extent necessary to accommodate the wear. Reciprocable within the body is a member that moves with the clutch pedal and that has, at one end, hinged collet members. As the member is withdrawn into the body, the collet members are forced to move radially inwardly into gripping engagement with the end of the cable. They are held in engagement with the cable during further movement of the clutch pedal by sliding within the body, the members moving with the cable.

A fitting intended to compensate for the stretch that may develop in the cable of a cable-and-sleeve connector used in a bicycle is described in French Specification No. 2 278 982. In this, a tube is urged against an end of the sleeve to ensure that there is no play at the end of the sleeve, despite variations due to stretching, in the length of the cable. When the cable is put under tension, the means by which tension is applied releases a spring-urged lever that makes contact with half the periphery of the sleeve (ridges in the outer surface of the lever then lying between ridges in the outer surface of the sleeve) to hold the member in position.

An object of the present invention is to provide means by which the effective length of the sleeve can be increased or decreased to compensate for real or effective increases or decreases in the length of the cable. An end of the sleeve is allowed to move into a compensating position when it is held by means that, whilst holding the sleeve, are fixed and surround it.

According to the present invention, there is provided a cable-and-sleeve connector in which one end of the cable is connected to an actuation member and the other is connected to a controlled member and the sleeve extends along a curved, deformable, path characterized in that the sleeve is connected at its end to two anchors, the connection to the anchor remote from the controlled member is effected by a clutch means comprising a plurality of collet members disposed around the sleeve and lying clamped between the walls of a tapered opening in that anchor and an end portion of the sleeve, the outer surfaces of the collet members defining a taper corresponding with that of the opening in the walls, the collet members being movable axially between this position and a position in which they permit axial movement of the end portion of the sleeve relatively to the opening, spring means urging the collet members towards their clamped position, and means that, when the actuation member is in its inoperative condition, effects disengagement of the collet members from the sleeve and, when the actuation member is operated, permits movement of the collet members to their clamping positions.

By way of example, an embodiment of the invention will now be described with reference to the accompanying drawings in which:-

Figure 1 is a schematic view of part of a clutch, a clutch pedal, and a curving cable-and-sleeve connection between the two that includes a self-adjusting mechanism by which the effective length of the sleeve can be varied,

Figure 2 is an enlarged side view of a component of the self-adjusting mechamism,

Figure 3 is a perspective view of a locking collet that forms a component of the self-adjusting mechanism,

Figure 4 is an enlarged axial section of the self-adjusting mechanism, illustrating the relative positioning of its components when the cable is under tension, and

Figure 5 is an enlarged axial section of the self-adjusting mechanism illustrating the relative positioning of its components when the cable is relaxed.

In the apparatus illustrated in the drawings, a controlled member, in the form of a clutch 2, is connected by a control cable 3 to an actuation member, in the form of a clutch pedal 4 of an automobile. The cable 3 extends through the housing 5 of a self-adjusting mechanism indicated generally at 1. The housing 5 itself extends through, and is fixed to, an anchor in the form of a fire wall 6 separating the engine compartment on the left from the passenger compartment on the right. On the engine side, the cable 3 extends through a first sleeve part 7 and on the passenger side, the cable 3 extends through a second sleeve part 9. One end of the sleeve part 7 is fixed to an anchor 8 whilst the other end is connected to the housing 5 in a way, as will be explained later, that is automatically adjustable to compensate for variations in the length of the cable 3. Between the ends of the sleeve part 7, the cable 3 and the sleeve part 7 are curved and sufficiently unrestrained to enable the curvature to change to some extent.

To actuate the clutch 2, the clutch pedal 4 is is depressed, so applying an operating tension to the cable 3. A pedal return spring 10 serves to return the clutch pedal 4 to an "up" position. The clutch 2 includes a lever 12 that controls a clutch spring 13 that normally forces facing plates, not shown, of the clutch into driving engagement with a pressure of 41 Kgm. By depressing pedal 4, tension is exerted upon the control cable 3 which will move the lever 12 to relieve the clutch plates of the force normally exerted by clutch spring 13, allowing gears to be shifted.

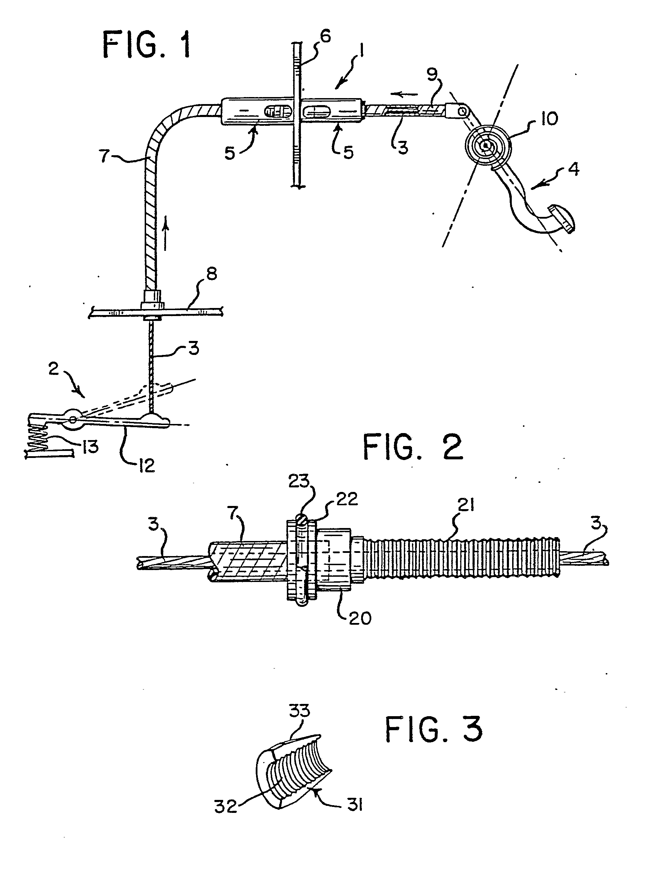

As shown in Figure 2, an end of the sleeve part 7 extends into the housing 5 and the end portion is in the form of a rigid tubular member 20 providing at one end a guide collar 22 onto which an O ring 23 that fits within the housing 5 is placed. Beyond the collar 22 the outer surface of the member 20 is serrated at 21.

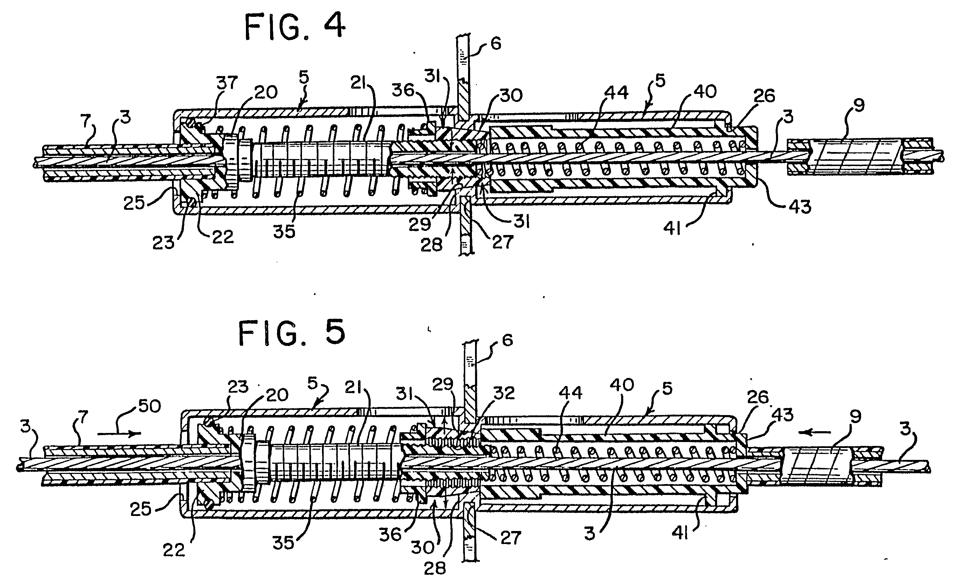

More details of the self adjusting mechanism of which the housing 5 is a part are shown in Figures 4 and 5. The housing 5 has an aperture 25 at one end, through which the first sleeve part 7 extends and an aperture 26 at its opposite end. The housing 5 is formed externally with an annular groove 27 in which the fire wall 6 lies to anchor the housing and therefore the self-adjusting mechanism. The housing is divided internally by a shoulder 28, the opening through which is defined by a circular wall portion 29 that tapers towards the passage compartment.

A clutch means 30 including four collet members 31 is adapted to co-operate with serrations 21. A collet member 31 is shown in Figure 3 and each has internal serrations 32 which match the serrations 21 and an outer surface 33 which has a taper corresponding to the taper of the wall portion 29.

The rigid tubular member 20 is surrounded by a first helical spring 35 extending between a loose-fitting collar 36 which bears on an end of the collet members 31 and the shoulder 37 formed by the end of the collar 22. Consequently, the spring 35 will be effective to urge the collets 31 into contact with the tapered wall 29, and the effect of such contact will be to urge the collet members 31 radially inwardly so that the serrations on the inner surface of the cable 31 will engage with the serrations 21.

To enable engagement of the collet members 31 from the sleeve part 7 to be effected, a clutch release means, in the form of a tubular member 40, is positioned co-axially within housing 5 around control cable 3. The tubular member 40 has a shoulder 41 which abuts a flange that defines the opening 26 to prevent the member 40 from being moved out of the housing and also acts as a guide when the member 40 moves within the housing 5. The end portion of the member 40 protrudes through the aperture 26 so that the end wall 43 may be abutted by the end of the second sleeve 9. The other end of the member 40 abuts the collet members 31.

A helical spring 44 acting within the housing 5 between the end of the sleeve 7 and the end wall 43 urges the shoulder 41 towards contact with the end of the housing

The operation of what has been described will now be explained. When, as shown in Figure 4, tension is exerted on the control cable 3 by depression of the pedal 4, the control cable will be tensioned to pull the lever 12 against the force of the relatively heavy clutch spring 13 to release the clutch plates that the spring normally holds in engagement. Movement of the pedal 4 will allow the second sleeve part 9 to move and so relieve the compression on the spring 44 which will in turn, move the tubular member 40 to the right until the shoulder 45 is in abutment with the end wall 43. First spring means 35 can then become effective to force the outer peripheral surfaces 33 of the collet members into engagement with the tapered wall 29 of the housing, and further axial movement of the collet members in that direction will move them radially inwardly until the serrations of the collet members 31 engage with serrations on the tubular member 21 and so lock that end of the sleeve part 7 with respect to the housing.

When the pedal 4 is released, it will rotate in a counterclockwise direction and move the second sleeve part 9 to the left until, as shown in Figure 5, it engages the end of the member 40. Further movement of the sleeve part 9 will move the member 40 to the left and this will move the collet members 31 to the left against the force of the first spring 35. This releases the locking effect of the collet members 31 on the member 21 so that it may move longitudinally of the sleeve itself within the housing 5.

When the system is installed in a manual transmission system, progressive wear of the clutch plates will cause the pedal 12 to move progressively further from the anchor 8 when the pedal 4 is released. This additional "length" is provided by a variation in, or deformation of, the curvature of the first sleeve part 7 by a corresponding shortening of the real length of the sleeve part 7 lying between the anchor 8 and the collet members 31. When the collet members 31 are released from the member 20, then that end of the first sleeve part 7 can move in the direction of the arrow 50 of Figure 5 in accordance with the changes in its curvature. The device that has been described acts in the same way to accommodate real increases in the length of the cable 3 such as might result from stretching of the cable. To accommodate any real or effective reduction in the length of the cable 3 (such as might result if the clutch 2 were supposed to be replaced by a brake of which the shoes wear), then compensating change in the length of the sleeve part 7 would result from the movement of the member 20 in the opposite sense to the arrow 50.

The apparatus that has been described can readily be installed in an existing system.

## Claims

1. A cable-and-sleeve connector in which one end of the cable (3) is connected to an actuation member (4) and the other end is connected to a controlled member (2), and the sleeve (7) extends along a curved, deformable, path characterized in that the sleeve is connected at its ends to two anchors (6) and (8), the connection to the anchor (6) remote from the controlled member (2) is effected by a clutch means comprising a plurality of collet members (31) disposed around the sleeve (7) and lying clamped between the walls (29) of a tapered opening in that anchor (6) and an end portion (20) of the sleeve (7), the outer surface of the collet members (31) defining a taper corresponding with that of the opening in the walls (29), the collet members (31) being movable axially between this position and a position in which they permit axial movement of the end portion (20) of the sleeve relatively to the opening, spring means (35) urging the collet members (31) towards their clamped position, and means (40) that, when the actuation member (4) is in its inoperative condition, effects disengagement of the collet members (31) from the sleeve (20) and, when the actuation member (4) is operated, permits movement of the collet members (31) to their clamping positions.

2. Apparatus as claimed in claim 1 in which, the spring means is a helical spring (35) encircling the end portion (20) of the sleeve, one end of the spring acting on the collet member (31) and other end of the spring acting on a collar (22) projecting inwardly from the sleeve.

• 3. Apparatus as claimed in claim 2 in which, from the collar (22) to the collet members (31), the sleeve is rigid.

4. Apparatus as claimed in claim 3, in which the outer surface (21) of the rigid part (20) of the sleeve is serrated and the surfaces of the collet members (31) that co-operate with the rigid part (20) of the sleeve are matchingly serrated (32).

5. Apparatus as claimed in any of the preceding claims in which the means mentioned last in claim 1 includes a sleeve (9) extending along the cable between the anchor (6) in which the opening is provided and the actuation member (4) and that, when the actuation member (4) is relaxed, is held by the actuation member (4) to exert a force axially on the collet members (31) sufficient to move the collet members (31) to a position in which they permit axial movement of the end portion (20) of the sleeve.

6. Apparatus as claimed in claim 5, in which there is interposed between the end of the sleeve (9) and the collet members (31) a rigid cylinder (40) encircling the cable (3) and spring-urged (44) away from the position in which the disengaging force is exerted on the collet members (31).

7. Apparatus as claimed in claim 6, in which the rigid cylinder (40) is spring-urged by a helical spring (44) within the cylinder and around the cable (3) and acting between the end portion (8) of the sleeve and an inwardly directed flange (43) on the cylinder.

8. Apparatus as claimed in claim 7, in which there is a housing (5) fixed to the anchor (6) and containing the part of the apparatus between the collar (22) specified in claim (2) and an abutment member (41) projecting outwardly from the cylinder (40) specified in claim (7) and co-operating with an abutment formed on the housing to limit the extent to which the cylinder (40) may protrude from the housing (5).

## Patentansprüche

1. Bedienungsvorrichtung mit in einer Führungshülle eingelegtem Kabel, wobei ein Ende des Kabels (3) mit einem Bedienungsteil (4) und das andere Ende mit einem gesteuerten Teil (2) verbunden ist und sich die Führungshülle (7) entlang eines gekrümmten de formierbaren Weges erstreckt, gekennzeichnet durch folgende Maßnahmen:

die Führungshülle ist an ihren Ended mit zwei Anker (6 und 8) verbunden, wobei die Verbindung mit dem Anker (6) entfernt von dem gesteuerten Teil (2) durch eine Kupplungseinrichtung bewerkstelligt wird, die eine Mehrzahl von Spanngliedern (31) aufweist, welche um die Führungshülle (7) herum angeordnet sind und zwischen den Wandungen (29) einer sich verjüngenden Öffnung in dem Anker (6) und einem Endteil (20) der Führungshülle (7) geklemmt liegen;

die Außenoberfläche der Spannglieder (31) verjüngt sich entsprechend der Verjüngung der Öffnung in den Wandungen (29);

die Spannglieder (31) sind axial zwischen dieser Lage und einer Lage verschiebbar, in welcher sie die axiale Bewegung des Endteils (20) der Führungshülle relativ zu der Öffnung ermöglichen;

Federn (35) drängen die Spannglieder (31) in ihre Klemmlage und eine Einrichtung (40) bewirkt das Ausrücken der Spannglieder (31) aus der Führungshülle (20), wenn das Betätigungsteil (4) in seiner nicht betätigten Lage ist, und ermöglicht die Bewegung der Spannglieder (31) in ihre Klemmlage, wenn Betätigungsteil (4) betätigt ist.

2. Bedienungsvorrichtung nach Anspruch 1, dadurch gekennzeichnet, daß die Feder eine Schraubenfeder (35) ist, welches den Endteil (20) der Führungshülle umgibt, und daß das eine Ende der Feder auf die Spannglieder (31) und das andere Ende der Feder auf einen Kragen (22) wirkt, der nach außen von der Führungshülle absteht.

3. Bedienungsvorrichtung nach Anspruch 2, dadurch gekennzeichnet, daß die Führungshülle vom Kragen (22) bis zu den Spanngliedern (31) steif ausgebildet ist.

4. Bedienungsvorrichtung nach Anspruch 3, dadurch gekennzeichnet, daß die Außenoberfläche (21) des steifen Teils (20) der Führungshülle gerieft ist und die Oberflächen Spannglieder (31), die mit dem steifen Teil (20) der Führungshülle zusammenarbeiten, entsprechend angepaßte Riefelungen (31) aufweisen.

5. Bedienungsvorrichtung nach einem der Ansprüche 1 bis 4, dadurch gekennzeichnet, daß die Einrichtung (40) gemäß letztem Merkmal des Anspruchs 1 eine Hülse (9) aufweist, die sich entlang des Kabels zwischen dem Anker, in welchem die Öffnung vorgesehen ist, und dem Betätigungsteil (4) erstreckt und daß sie bei losgelassenem Betätigungsteil (4) von diesem gehalten wird, um eine genügende Kraft in Axialrichtung auf die Spannglieder (31) auszuüben, um diese in eine Lage zu verschieben, in welcher sie die axiale Bewegung des Endteils (10) der Hülse zulassen.

6. Bedienungsvorrichtung nach Anspruch 5, dadurch gekennzeichnet, daß zwischen dem Ende der Hülse (9) und den Spanngliedern (31) ein starrer Zylinder (40) gefügt ist, der das Kabel (3) umgibt und durch eine Feder (44) aus der Lage gedrängt wird, in welcher die Ausrückkraft auf die Spannglieder (31) ausgeübt wird.

7. Bedienungsvorrichtung nach Anspruch 6, dadurch gekennzeichnet, daß der starre Zylinder (40) von einer Schraubenfeder (44) unter Federspannung gehalten wird, die innerhalb des Zylinders und um das Kabel (3) angeordnet ist und zwischen dem Endteil (8) der Führungshülle und einem nach innen gerichteten Flansch (43) des äußeren Zylinders wirkt.

8. Bedienungsvorrichtung nach Anspruch 7, dadurch gekennzeichnet, daß ein Gehäuse (5) mit dem Anker (6) verbunden ist und einen Teil des Gerätes zwischen dem Kragen (22), wie in Anspruch 2 ausgeführt, und einem Anschlagsglied (41) enthält, welches sich nach außen vom Zylinder (40) gemäß Anspruch 7 erstreckt und mit einem Anschlag an dem Gehäuse zusammenarbeitet, um den Betrag zu begrenzen, mit dem der Zylinder (40) von dem Gehäuse (5) vorstehen kann.

**Revendications**

1. Connecteur à câble sous gaine dans lequel l'une des extrémités du câble (3) est reliée à un organe d'action (4) et l'autre à un organe commandé (2), et dans lequel la gaine (7) s'étend suivant un trajet déformable courbe, caractérisé en ce que la gaine est reliée à ses extrémités à deux éléments d'ancrage (6 et 8), la liaison à l'élément d'ancrage (6) éloigné de l'organe commandé (2) est assurée par des moyens d'embrayage comportant une pluralité d'éléments de douille (31) disposés autour de la gaine (7) et longitudinalement serrés entre les parois (29) d'une ouverture conique pratiquée dans cet élément d'ancrage (6) et une portion d'extrémité (20) de la gaine (7), la surface extérieure des éléments de douille (31) définissant un cône correspondent à celui de l'ouverture dans les parois (29), les éléments de douille étant mobiles axialement entre cette position et une position dans laquelle ils permettent un mouvement axial de la portion d'extrémité (20) de la gaine par rapport à l'ouverture, des moyens de ressort (35) sollicitant les éléments de douille (31) en direction de leur position serrée, et des moyens (40) qui, quand l'organe d'action (4) est en condition d'inactivité, assurent un désengagement des éléments de douille (31) par rapport à la gaine (20), et qui, quand l'organe d'action (4) est mis en oeuvre, permettent on mouvement des éléments de douille (31) en direction de leur position de serrage.

2. Appareil suivant la revendication 1, caractérisé en ce que les moyens de ressort sont formés par ressort hélicoïdal (35) entourant la portion d'extrémité (20) de la gaine, l'une des extrémités de ce ressort agissant sur les éléments de douille (31) et l'autre sur un collier (22) faisant saillie vers l'extérieur à compter de la gaine.

3. Appareil suivant la revendication 2, caractérisé en ce que, du collier (22) aux éléments de douille (31), la gaine est rigide.

4. Appareil suivant la revendication 3, caractérisé en ce que la surface extérieure (21) de la partie rigide (20) de la gaine est striée, et les surfaces des éléments de douille (31) qui coopèrent avec la partie rigide (20) de la gaine sont striés de manière complémentaire (32).

5. Appareil suivant l'une quelconque des revendications précédentes, caractérisé en ce que les moyens mentionnés en dernier dans la revendication 1 comportent une gaine (9) qui s'étend le long du câble entre l'élément d'ancrage (6) dans lequel l'ouverture est pratiquée et l'organe d'action (4), et qui, lorsque l'organe d'action (4) est relaché, est tenu par l'organe d'action (4) de manière à exercer axialement sur les éléments de douille (31) une force suffisante pour déplacer ces éléments de douille (31) en direction d'une position dans laquelle ils autorisent un mouvement axial de la portion d'extrémité (20) de la gaine.

6. Appareil suivant la revendication 5, caractérisé en ce que, entre l'extrémité de la gaine (9) et les éléments de douille (31) est interposé un cylindre rigide (40) qui entoure le câble (3) et qui est solicité élastiquement (44) en direction opposée à la position dans laquelle la force de désengagement est excercée sur les éléments de douille (31).

7. Appareil suivant la revendication 6, caractérisé en ce que le cylindre rigide (40) est sollicité élastiquement par un ressort hélicoïdal (44) qui est disposé dans le cylindre, autour du câble (3), et qui agit entre la portion d'extrémité (8) de la gaine et une bride (43) du cylindre dirigée vers l'intérieur.

8. Appareil suivant la revendication 7, caractérisé en ce que sur l'élément d'ancrage (6) est fixé un logement (5) qui contient la partie de l'appareil entre le collier (22) mentionné dans la revendication 2 et un élément de butée (41) qui fait saillie vers l'extérieur sur le cylindre (40) mentionné

9 0 048 620 10

dans la revendication 7, ledit élément de butée coopérant avec une butée formée sur le logement pour limiter la quantité dont le cylindre (40) peut faire saillie du logement (5).

0 048 620

FIG. 1

FIG. 2

FIG. 3

1

FIG. 4

FIG. 5